# EUROPÄISCHE PATENTANMELDUNG

(11) **EP 1 076 376 A2**
(43) Veröffentlichungstag der Anmeldung: **14.02.2001**
(21) Anmeldenummer: 00115640.5
(22) Anmeldetag: 20.07.2000
(51) Int. Cl.: H01Q 1/24, H01Q 1/22, H01Q 1/12, H01Q 23/00, H04B 1/38

(54) **Erweiterungsset in Form eines separaten Antennenfusses für ein Empfangsgerät, insbesondere für ein Empfangsgerät zum Empfang terrestrisch ausgestrahlter digitalisierter Fernsehprogramme (DVB-T)**

(30) Priorität: 12.08.1999 DE 29914048 U
(71) Anmelder: Kathrein-Werke KG, 83022 Rosenheim (DE)
(72) Erfinder: Exler, Ralf, 83059 Kolbermoor (DE); Gruber, Heinrich, 83135 Rosenheim (DE); Flinner, Udo, 83059 Kolbermoor (DE)
(74) Vertreter: Flach, Dieter Rolf Paul, Dipl.-Phys.

(57) **Zusammenfassung**

Ein verbessertes Erweiterungsset für ein Empfangsgerät, insbesondere ein DVB-T-Empfangsgerät zeichnet sich durch folgende Merkmale aus:
- das Erweiterungsset umfasst eine separate Antennenstandeinrichtung (5),
- das Erweiterungsset umfasst ein Antennenanschlusskabel (7), und
- die am Empfangsgerät (1) elektrisch anschließbare und mechanisch gehaltene Antenne (3) ist abziehbar und an einer Anschlussstelle (12'') an der Antennenstandeinrichtung (5) mechanisch veranker- und elektrisch anschließbar, wobei ferner das freie Ende (9) des Antennenkabels (7) an einer Anschlussstelle (12, 12') am Empfangsgerät so kontaktierbar ist, dass mittels des Empfangsgeräts (1) über die von ihm entfernt aufgestellte Antenne (3) Programme empfangbar sind.

## Beschreibung

Die Erfindung betrifft ein Erweiterungsset für ein Empfangsgerät, insbesondere DVB-T-Empfangsgerät nach dem Oberbegriff des Anspruches 1.

Bei einem DVB-T-Empfangsgerät handelt es sich bekanntermaßen um einen Receiver zum Empfang terrestrisch ausgestrahlter digitalisierter Fernsehprogramme (D = digital, V = video, B = broadcasting, T = terrestrisch).

Derartige Geräte können per se mit einer einsteckbaren Antenne versehen sein, da die senderseitig ausgestrahlte Leistung ausreichen soll, um mit derarten Zimmerantennen die Geräte betreiben zu können.

Allerdings ist durchaus nicht ausgeschlossen, dass am Aufstellungsort des Empfangsgerätes, an welchem die Antenne direkt eingesteckt ist, möglicherweise der Empfang schlechter als an anderer Stelle im Raum ist. Von daher ist es manchmal wünschenswert, eine separate Antenne über ein Antennenkabel am Receiver anzuschließen. Dies erfordert den Kauf einer weiteren Antenne, eventuell den Kauf eines weiteren Antennenkabels etc.

Aufgabe der vorliegenden Erfindung ist es, ausgehend von dem genannten Stand der Technik ein verbessertes Erweiterungsset für ein Empfangsgerät zum Empfang von Video, Audio- und/oder Datensignalen, insbesondere als ein DVB-T-Empfangsgerät zu schaffen.

Die Aufgabe wird erfindungsgemäß entsprechend den im Anspruch 1 angegebenen Merkmalen gelöst. Vorteilhafte Ausgestaltungen der Erfindung sind in den Unteransprüchen angegeben.

Um den Kunden bei Bedarf ein möglichst kostengünstig herstellbares Erweiterungsset zur Verfügung zu stellen, mit welchem auf einfachem Wege die Empfangsleistung auch bei ungünstigem Aufstellungsort für den Receiver verbessert werden kann, wird erfindungsgemäß eine separate Antennenstandeinrichtung, d.h. beispielsweise ein an geeigneter Stelle aufstellbarer Antennenfuß, vorgeschlagen. Dieser kann z.B. mit einem von ihm ausgehenden integrierten Antennenkabel versehen sein, welches am DVB-T-Empfangsgerät angeschlossen werden kann. Die Antennenstandeinrichtung bzw. der Antennenfuß ist dabei allerdings so gestaltet, dass die von Hause aus in dem Receiver einsteckbare Antenne weiter verwendet werden kann, also in der Antennenstandeinrichtung bzw. im Antennenfuß auf- bzw. einsteckbar ist.

Somit braucht der Kunde lediglich einen Antennenfuß mit oder ohne integrierter Kabeleinrichtung käuflich erwerben, um die möglicherweise mit dem Receiver zusammen ausgelieferte direkt in ihm einsteckbare Antenne weiter verwenden zu können.

In einer bevorzugten Ausführungsform der Erfindung ist vorgesehen, dass in dem Antennenfuß, d.h. in der Antennenstandeinrichtung entweder nur passive Schaltelemente oder beispielsweise auch aktive Schaltelemente, insbesondere in Form eines Antennensignal-Verstärkers untergebracht sind bzw. ist.

Insbesondere im Falle eines aktiven Bausteins im Antennenfuß kann die Energieversorgung über ein separates zuschaltbares Netzteil erfolgen. Als günstig hat sich ferner eine Ausführungsform erwiesen, bei der das Netzteil ebenfalls im Antennenfuß mit integriert ist. Alternativ dazu kann eine Leistungsversorgung einer im Antennenfuß untergebrachten aktiven Baugruppe, beispielsweise eines Antennensignalverstärkers, aber auch über den Receiver selbst, also über das zuschaltbare Antennenkabel erfolgen.

Die Erfindung wird nachfolgend anhand von Zeichnungen näher erläutert. Dabei zeigen im einzelnen:
- Figur 1 :: eine schematische Darstellung eines DVB-T-Empfangsgerätes mit eingesteckter Antenne;
- Figur 2 :: ein Erweiterungsset bestehend aus einem schematisch angedeuteten Antennenfuß mit integriert aus diesem herausgeführten Antennenkabel; und
- Figur 3 :: den in Figur 1 gezeigten Receiver mit der Antenne unter Zwischenschaltung des in Figur 2 wiedergegebenen Erweiterungssets.

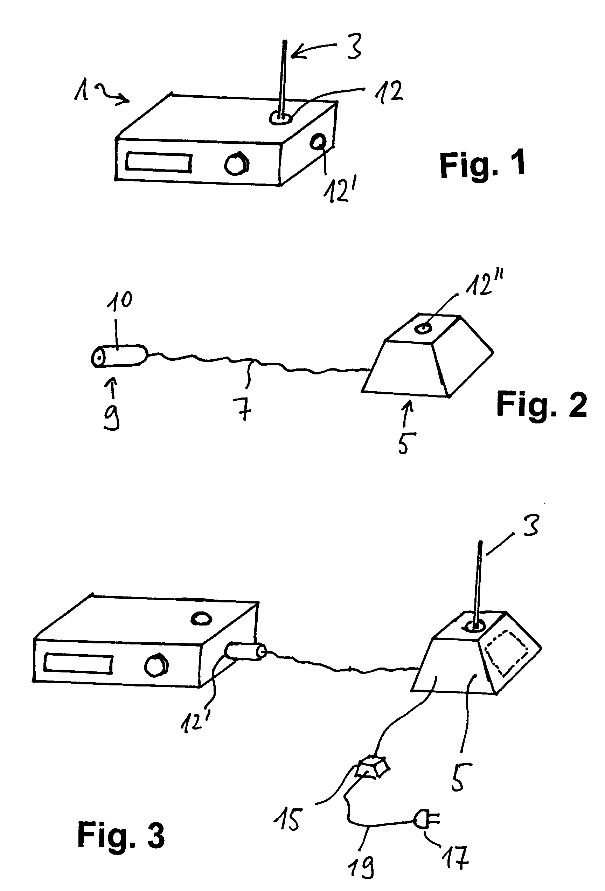

In Figur 1 ist schematisch als quaderförmiger Block ein DVB-T-Empfangsgerät 1 gezeigt, also ein Receiver, der zum Empfang von terrestrisch ausgestrahlten digitalisierten Videoprogrammen geeignet ist.

Wie angedeutet ist, ist in dem Empfangsgerät 1 eine in Figur 1 ebenfalls nur schematisch wiedergegebene Antenne 3 direkt anschließbar, also eine Antenne 3, die mit dem Empfangsgerät 1 mechanisch verbindbar ist und darüber gehalten wird und zum anderen mit dem Empfangsgerät 1 elektrisch kontaktiert ist.

Antennen, die im Haus einen guten Empfang digitalisierter Videoprogramme, die terrestrisch ausgestrahlt werden, ermöglichen, sind grundsätzlich bekannt. Allerdings gibt es bestimmte Aufstellungsorte, an denen die Antenne möglicherweise nur einen schlechten Empfang ermöglicht, so dass unter Umständen getestet werden muss, wo im Raum die Antenne am besten aufgestellt wird. Da der Aufstellungsort der Antenne dann möglicherweise entfernt von dem Receiver 1 liegt, wird eine weitere Antennenanordnung grundsätzlich benötigt, die über ein Antennenkabel mit dem Receiver 1 verbunden ist. Denn die in Figur 1 wiedergegebene steckbare Antenne ist aus Kostengründen so einfach gestaltet, dass sie mechanisch nur durch die elektrische Steckverbindung am Receiver 1 in ihrer Ausrichtlage gehalten wird, also nicht separat aufgestellt werden kann.

Als Erweiterungsset hierfür ist nunmehr gemäß Figur 2 eine Antennenstandeinrichtung 5 vorgesehen, die im folgenden auch nur kurz als Antennenfuß 5 bezeichnet wird. Ein derartiger Antennenfuß 5 ist in Figur 2 nur schematisch angedeutet.

Bei dem Ausführungsbeispiel gemäß Figur 2 ist ein Antennenanschlusskabel 7, in der Regel ein koaxiales Antennenanschlusskabel 7 bereits im Antennenfuß 5 integriert angeschlossen und ggf. untrennbar mit diesem verbunden, so dass es nunmehr nur noch notwendig ist, das freie Kabelende 9 bzw. einen dort vorgesehenen Stecker oder eine Buchse 10 am Empfangsgerät 1 an geeigneter Stelle anzuschließen (beispielsweise an der Anschlussstelle 12, an der gemäß Figur 1 die Antenne 3 üblicherweise direkt an- bzw. aufgesteckt wird). Ggf. kann an dem Receiver 1 auch eine weitere Anschlussstelle 12' vorgesehen sein, beispielsweise auf der Rückseite oder einer anderen Seite. In Figur 3 ist eine weitere Anschlussstelle 12' an der rechten Seitenwand dargestellt. Bei diesem Ausführungsbeispiel kann die vom Empfangsgerät 1 abgezogene Antenne 3 direkt am Kabelfuß 5 an einer dort ausgebildeten Anschlussstelle 12'' aufgesteckt werden, so dass sich die in Figur 3 wiedergegebene Konfiguration ergibt, bei welcher beispielsweise der am freien Kabelende 9 vorgesehene Stecker bzw. die Buchse 10 an der Anschlussstelle 12' am Receiver 1 angeschlossen ist. Der Antennenfuß 5 kann lediglich als mechanischer Standfuß ausgebildet sein, der im Inneren eine elektrische Verbindung von der aufgesteckten Antenne 3 zu dem Antennenanschlusskabel 5 gewährleistet.

Möglich ist aber auch, dass insbesondere im Antennenfuß 5 beispielsweise passive oder sogar aktive Baugruppen untergebracht sind, beispielsweise in Form eines elektrischen Verstärkers, d.h. elektrischen Antennenverstärkers 13.

Wie in Figur 3 auch angedeutet ist, könnte dieser elektrische Antennenverstärker 13 über ein externes Netzteil 15, welches am üblichen Stromnetz über einen Stecker 17 anschließbar ist, mit Strom und Spannung versorgt werden. In einer abgewandelten Ausführungsform ist es aber genauso möglich, dass ein entsprechendes Netzteil 15 im Antennenfuß 5 untergebracht ist, so dass bei externer Stromversorgung aus dem Antennenfuß nur noch ein elektrisches Stromkabel 19 zum Anschluss an einem hausinternen Netz herausgeführt werden muss.

Schließlich ist es in einer weiteren Abwandlung aber auch möglich, dass der im Antennenfuß 5 untergebrachte elektrische Antennenverstärker 13 über die Antennenanschlussleitung 7 vom Receiver aus mit entsprechender elektrischer Leistung versorgt wird, z.B. im Niedervoltbereich.

Schließlich ist es ebenso möglich, dass der Antennenfuß 5 und das Antennenanschlusskabel 7 natürlich als getrennte Baueinheiten ausgebildet sein können, so dass das Antennenanschlusskabel 7 zum einen am Receiver 1 und zum anderen am Antennenfuß 5 selbst angeschlossen werden muss, z.B. mittels einer Stecker-/Buchsen-Verbindung. Aber auch bei diesem Ausführungsbeispiel mit oder ohne im Antennenfuß integrierten Baugruppen, insbesondere einem Antennenverstärker, kann die an sich am Receiver 1 direkt aufsteckbare Antenne 3 weiter verwendet und bei Bedarf am Antennenfuß aufgesteckt werden. Ggf. kann auch eine baugleiche oder in der Ausführung abweichende weitere Antenne über den Antennenfuß 5 und das Antennenkabel 7 am Receiver 1 angeschlossen werden, wobei dann die in Figur 1 gezeigte Antenne 3 am Receiver weiterhin angeschlossen bleibt.

Das Empfangsgerät 1 kann beispielsweise aus einem Fernsehgerät, d.h. TV-Gerät, einem Rundfunkgerät oder beispielsweise aus einer PC-Empfangskarte bestehen, also aus einer in einen Computer einbaubaren Karte, um hierüber Fernseh- und/oder Hörfunkprogramme oder sonstige Informationen und Daten über den PC empfangen zu können.

Die Erfindung ist ferner anhand von DVB-T-Signalen und einem entsprechenden DVB-T-Empfänger erläutert worden. Das erläuterte Anwendungsbeispiel ist aber ebenso auf Geräte anwendbar, die ganz allgemein zum Empfang elektromagnetischer Wellen geeignet sind.

## Patentansprüche

1. Erweiterungssets für ein Empfangsgerät, insbesondere ein DVB-T-Empfangsgerät zum Empfang terrestrisch ausgestrahlter digitalisierter Fernsehprogramme mit einer Anschlussstelle (12) zum direkten Anschluss einer Antenne (3) am Empfangsgerät, **gekennzeichnet durch** die folgenden Merkmale
- das Erweiterungsset umfasst eine separate Antennenstandeinrichtung (5),
- das Erweiterungsset umfasst ein Antennenanschlusskabel (7), und
- die am Empfangsgerät (1) elektrisch anschließbare und mechanisch gehaltene Antenne (3) ist abziehbar und an einer Anschlussstelle (12'') an der Antennenstandeinrichtung (5) mechanisch veranker- und elektrisch anschließbar, wobei ferner das freie Ende (9) des Antennenkabels (7) an einer Anschlussstelle (12, 12') am Empfangsgerät so kontaktierbar ist, dass mittels des Empfangsgeräts (1) über die von ihm entfernt aufgestellte Antenne (3) Programme empfangbar sind.

2. Erweiterungsset nach Anspruch 1, **dadurch gekennzeichnet**, dass die Antennenstandeinrichtung (5) im Inneren nur eine elektrische Verbindung zum Antennenkabel (7) bzw. passive elektrische Bauelemente umfasst.

3. Erweiterungsset nach Anspruch 1, **dadurch gekennzeichnet**, dass in der Antennenstandeinrichtung (5) aktive elektrische Bauelemente bzw. zumindest eine aktive elektrische Baugruppe untergebracht sind, vorzugsweise in Form eines Antennenverstärkers.

4. Erweiterungsset nach Anspruch 1 oder 3, **dadurch gekennzeichnet**, dass die zumindest eine aktive Baugruppe (13) über das Antennenkabel (7) vom Empfangsgerät (1) gespeist wird.

5. Erweiterungsset nach Anspruch 1 oder 3, **dadurch gekennzeichnet**, dass die zumindest eine aktive Baugruppe (13) über ein separates Netzteil (15) gespeist wird.

6. Erweiterungsset nach Anspruch 5, **dadurch gekennzeichnet**, dass das Netzteil (15) in der Antennenstandeinrichtung (5) integriert untergebracht ist.

7. Erweiterungsset nach Anspruch 5, **dadurch gekennzeichnet**, dass das Netzteil (15) extern von der Antennenstandeinrichtung (5) vorgesehen ist.

8. Erweiterungsset nach einem der Ansprüche 1 bis 7, **dadurch gekennzeichnet**, dass das Antennenkabel (7) über eine Schnittstelle mit der Antennenstandeinrichtung (5) verbunden ist.

9. Erweiterungsset nach einem der Ansprüche 1 bis 7, **dadurch gekennzeichnet**, dass das Antennenkabel (7) an der Antennenstandeinrichtung (5) integriert und fest mit dieser verbunden ist.

10. Erweiterungsset nach einem der Ansprüche 1 bis 9, **dadurch gekennzeichnet**, dass das Empfangsgerät aus einem Fernsehgerät, einem Radio oder einer in einen Computer einbaubaren PC-Karte besteht.
